# EUROPEAN PATENT SPECIFICATION

(11) **EP 0 500 131 B1**
(45) Date of publication and mention of the grant of the patent: **10.01.2001**
(21) Application number: 92102969.0
(22) Date of filing: 21.02.1992
(51) Int. Cl.: C08J 5/18, C08G 64/08, C08J 3/11, C08G 77/448

(54) **Polycarbonate resin solution for film formation by casting**
Polycarbonatharzlösung zur Herstellung gegossener Folien
Solution de polycarbonate pour la préparation des films coulés

(30) Priority: 22.02.1991 JP 4861991; 18.07.1991 JP 20394591; 17.07.1991 JP 20248391
(43) Date of publication of application: 26.08.1992
(73) Proprietor: MITSUBISHI GAS CHEMICAL COMPANY, INC., Chiyoda-ku, Tokyo (JP)
(72) Inventor: Kanayama, Satoshi, c/o Mitsubishi Gas Chem.Co.Inc., Toyonaka-shi, Osaka (JP); Ogawa, Noriyoshi, c/o Mitsubishi Gas Chem.Co.Inc., Toyonaka-shi, Osaka (JP); Kawahigashi, Teruo, c/o Mitsubishi Gas Chem.Co.Inc, Toyonaka-shi, Osaka (JP); Okigawa, Toshio, c/o Mitsubishi Gas Chem.Co.Inc., Toyonaka-shi, Osaka (JP)
(74) Representative: Hansen, Bernd, Dr. Dipl.-Chem.

(56) References cited:
- EP-A- 0 434 848
- WO-A-91/00885
- DE-A- 1 694 306
- GB-A- 1 382 365
- Chemistry and Physics of Polycarbonates, H.Schnell, 1964, p.99-101
- Polymer Preprints, vol.29, no.1, 6/88, p.305-306, Mittlefehldt, E.R. et al., " A factorial approach..."

## Description

### FIELD OF THE INVENTION

The present invention relates to a polycarbonate resin solution for use in film formation by casting. More particularly, this invention relates to a polycarbonate resin solution having excellent suitability for film formation by casting due to the polycarbonate resin having a specific structure, and also relates to a process for producing the polycarbonate resin solution.

### BACKGROUND OF THE INVENTION

It is well known that in the cast-film process, a film is produced by casting a resin solution onto the surface of a drum or belt to form a wet film on the surface and removing the solvent from the wet film by hot-air drying, and that a roll, plate, or other various parts are dipped into a resin solution to coat or line the surface. However, polycarbonate resin solutions for such uses generally begin to become milky in 3 to 4 days when allowed to stand. It has therefore been necessary to use polycarbonate resin solutions having low resin concentrations or to redissolve the precipitate or otherwise treat the milky resin solution before use, resulting in a disadvantage of poor production efficiency in film formation by casting. Furthermore, films obtained from conventional polycarbonate resin solutions have been unsatisfactory in, for example, that they have low hardness and poor abrasion resistance.

EP-A-0 434 848 describes a copolymer comprising polycarbonate blocks and polydimethylsiloxane blocks having a polydimethylsiloxane block content of 0.5 to 10 weight%, a n-hexane solubles content of 1 weight% or below, and a viscosity-average molecular weight of 10,000 to 50,000. The copolymer described has high impact resistance and gives a molding material with high impact strength when mixed with glass fiber of the like.

*Chemistry and Physics of Polycarbonates* by Hermann Schnell, John Wiley & Sons, 1964, Chapter V, describes the solution of aromatic polycarbonates in methylene chloride, m-cresol, pyridine, and dimethyl formamide.

GB-B-1 175 265 describes copolymers of (A) 1-95% by weight of organopolysiloxane blocks and (b) 5-95% by weight of the reaction products of a dihydroxy compound with a carbonyl halide or a diaryl carbonate.

### SUMMARY OF THE INVENTION

An object of the present invention is to overcome the above-mentioned problems by using a specific polycarbonate resin.

The present invention provides a polycarbonate resin solution for use in film formation by casting, the solution comprising:
(a) a non-halogenated aromatic hydrocarbon solvent comprising toluene, xylene or ethylbenzene; and dissolved therein
(b) 1-30% by weight, based on the solution, of a copolycarbonate resin consisting essentially of structural units represented by the following formula (1) and structural units represented by the following formula (2), the structural units of formula (2) being present in an amount of from 0.1 to 50% by weight based on the total amount of all the structural units, and having a viscosity-average molecular weight of from 15,000 to 100,000: 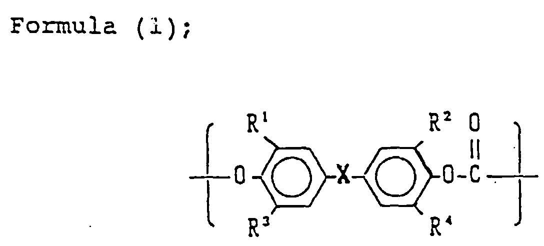 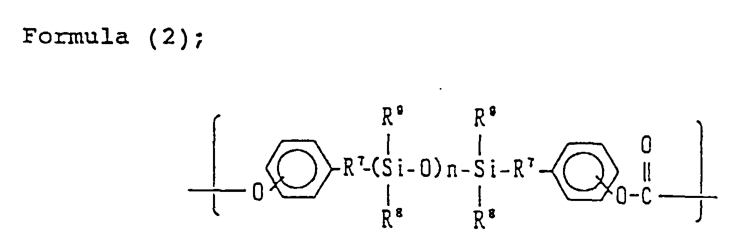 wherein in formula (1), R¹ and R² each represents a hydrogen atom, a halogen atom, or an alkyl group having from 1 to 4 carbon atoms, R³ and R⁴ each represents an alkyl group having from 1 to 4 carbon atoms, and -X- represents an arylene group, a group of the formula 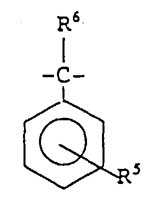 wherein R⁵ represents hydrogen atom, a halogen atom, or an alkyl group having from 1 to 4 carbon atoms and R⁶ represents an alkyl group having from 1 to 3 carbon atoms or an aryl group, or a substituted or unsubstituted carbocyclic or heterocyclic ring of the formula 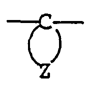 wherein Z represents a group of atoms necessary for forming the ring; and in formula (2), R⁷ represents an alkylene or alkylidene group having from 2 to 6 carbon atoms, R⁸ and R⁹ each represents an alkyl group having from 1 to 3 carbon atoms or an aryl group, and n is an integer of from 1 to 200.

The present invention also provides a process for producing the above polycarbonate resin solution.

The present invention further provides the use of the above polycarbonate resin solution in film formation by casting.

In another aspect, the present invention provides a method of forming a film by casting the above polycarbonate resin solution on to the surface of a drum or belt to form a wet film on said surface and removing the non-halogenated hydrocarbon solvent from the wet film by hot-air drying.

### DETAILED DESCRIPTION OF THE INVENTION

The polycarbonate resin used in the present invention can be obtained by copolymerizing dihydric phenols represented by the following formulae (3) and (4) with phosgene, a carbonic acid ester, or a chloroformate: 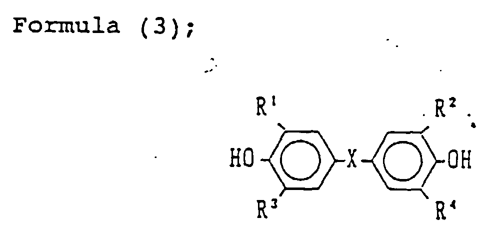 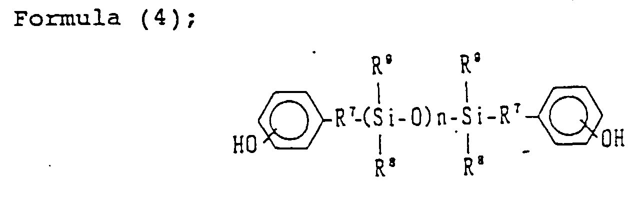 wherein in formula (3), R¹ and R² each represents a hydrogen atom, a halogen atom, or an alkyl group having from 1 to 4 carbon atoms, R³ and R⁴ each represents an alkyl group having from 1 to 4 carbon atoms, and -X- represents an arylene group, a group of the formula 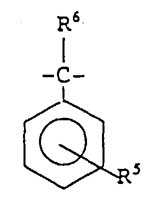 wherein R⁵ represents hydrogen atom, a halogen atom, or an alkyl group having from 1 to 4 carbon atoms and R⁶ represents an alkyl group having from 1 to 3 carbon atoms or an aryl group, or a substituted or unsubstituted carbocyclic or heterocyclic ring of the formula 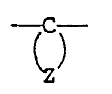 wherein Z represents a group of atoms wherein Z represents a group of atoms necessary for forming the ring; and in formula (4), R⁷ represents an alkylene or alkylidene group having from 2 to 6 carbon atoms, R⁸ and R⁹ each represents an alkyl group having from 1 to 3 carbon atoms or an aryl group, and n is an integer of from 1 to 200. This polycarbonate resin has structural units respectively represented by formulae (1) and (2) described above and has a viscosity-average molecular weight of from 15,000 to 100,000, preferably from 20,000 to 50,000.

In the above copolymerization, the dihydric phenol of formula (4) is used in an amount of from 0.1 to 50% by weight, preferably from 0.1 to 30% by weight, based on the total amount of all the dihydric phenols used. If the amount used of the dihydric phenol of formula (4) is below 0.1% by weight, the polycarbonate resin obtained is poor in slip properties, abrasion resistance, and other properties. If the amount thereof exceeds 50% by weight, the resulting polycarbonate resin is low in solubility, and solutions of such a polycarbonate resin have poor stability and poor film-forming properties.

Examples of the dihydric phenol compound represented by formula (3) used as a raw material -for producing the copolycarbonate resin of the present invention include 1,1-bis(3-methyl-4-hydroxyphenyl)-1-phenylethane (=dimethylbisphenol AP; DMBPAP). 1,1-bis(3,5-dimethyl-4-hydroxyphenyl)-1-phenylethane. Further, representative examples of the compound of formula (3) which have a carbocyclic or heterocyclic ring include 1,1-bis(3-methyl-4-hydroxyphenyl)cyclohexane (=dimethylbisphenol Z; DMBPZ) and 1,1-bis(3,5-dimethyl-4-hydroxyphenyl)cyclohexane. Preferred of these are dimethylbisphenol AP and dimethylbisphenol Z.

In combination with the dihydric phenol of formula (3), a dihydric phenol represented by formula (4) is used as another raw material for producing the copolycarbonate resin of the present invention. Symbol n in formula (4) which indicates the number of repeated units is from 1 to 200, preferably from 5 to 100. Examples of R⁷ in formula (4) include ethylene, propylene, isopropylene, butylene, pentylene, and hexylene groups and the like, with -CH₂CH₂CH₂- and -CHR¹⁰-CH₂- (where R¹⁰ is linked to the benzene ring-bonded carbon atom and represents hydrogen atom or methyl group) being particularly preferred. The structural unit of formula (2) is introduced into the polycarbonate resin by using the dihydric phenol of formula (4) having a phenolic hydroxyl group at both ends thereof in the same manner as that for ordinary dihydric phenols. This dihydric phenol represented by formula (4) can be easily produced by subjecting a phenol compound having an olefinically unsaturated carbon-carbon bond, preferably vinylphenol, allylphenol, or isopropenylphenol, to hydrosilanation reaction with a polysiloxane having a desired degree of polymerization, n, to bond the phenol compound to both ends of the polysiloxane chain.

For the copolymerization, a chain terminator or molecular weight modifier is usually used, which can be a compound having one phenolic hydroxyl group. Besides ordinarily employed phenol, p-tert-butylphenol, tribromophenol, and the like, examples of the chain terminator or molecular weight modifier include (long-chain alkyl)-phenols, aliphatic or aromatic carbonyl chlorides, aliphatic or aromatic carboxylic acids, hydroxybenzoic acid esters, hydroxyphenylalkyl acid esters, alkoxyphenols, and the like. The amount of the chain terminator or molecular weight modifier used is from 100 to 0.5 mol, preferably from 50 to 1 mol, per 100 mol of all the dihydric phenol compounds used. It is of course possible to use two or more such compounds in combination as the chain terminator or molecular weight modifier.

A branching agent can also be used in an amount of from 0.01 to 3 mol, preferably from 0.1 to 1.0 mol, per 100 mol of all the dihydric phenol compounds used, to produce a branched polycarbonate. Examples of the branching agent include polyhydroxy compounds such as phloroglucin, 2,6-dimethyl-2,4,6-tris(4-hydroxyphenyl)heptene-3, 4,6-dimethyl-2,4,6-tris(4-hydroxyphenyl)heptene-2, 1,3,5-tris(2-hydroxyphenyl)benzole, 1,1,1-tris(4-hydroxyphenyl)ethane, 2,6-bis(2-hydroxy-5-methylbenzyl)-4-methylphenol, and α,α',α''-tris(4-hydroxyphenyl)-1,3,5-triisopropylbenzene and other compounds including 3,3-bis(4-hydroxyaryl)oxindole (=isatinbisphenol), 5-chloroisatin, 5,7-dichloroisatin, 5-bromoisatin, and the like.

If required and necessary, various kinds of known additives or ingredients for use with conventional polycarbonate resins can be added to the polycarbonate resin of the present invention. For example, a reinforcement, filler, stabilizer, ultraviolet absorber, antistatic agent, lubricant, release agent, dye, pigment, flame retardant, and other additives, an elastomer for improving impact resistance, and the like can be added. Particularly preferred examples of the stabilizer are phosphorous acid and phosphites. Examples of the release agent include esters of saturated aliphatic acids with mono- or polyhydric alcohols. Preferred of these are stearyl stearate, behenyl behenate, pentaerythritol tetrastearate, dipentaerythritol hexaoctoate, and the like. Examples of the filler and reinforcement include such organic or inorganic materials as glass powder, glass beads, synthetic or fluorinated mica, zinc oxide, carbon fibers, glass fibers particularly those containing fibers with diameters of 2 µm or less, zinc oxide whiskers, stainless-steel fibers, Kevlar fibers, and the like. Examples of the elastomer include methyl methacrylate-butadiene-styrene copolymer(MBS), methyl methacrylate-acrylonitrile-butadiene-styrene copolymer(MABS), methyl methacrylate-acrylonitrile-styrene copolymer(MAS), and others. Further, an ordinary polycarbonate, a polyester carbonate, a polyarylate, or a similar resin may, of course, be also suitably used according to the use of final films obtained.

The solvent for use in preparing the polycarbonate resin solution of the present invention must dissolve the abovedescribed polycarbonate resin and have appropriate volatility. From the standpoint of safe and hygienic operations during casting, use is made of a non-halogenated solvent which is selected from toluene, xylene and ethylbenzene. The polycarbonate resin concentration in the solution is usually from 1 to 30% by weight, preferably from 5 to 20% by weight. Unlike ordinary polycarbonate resins, the polycarbonate resin used in the present invention has an advantage that it shows high solubility also in these non-halogenated solvents and its solutions are highly stable.

As described above, the polycarbonate resin solution of the present invention can diminish the safety and hygienic problems associated with conventional cast-film processes, because the solution of the present invention for use in film formation by casting can be a solution in toluene, xylene or ethylbenzene due to the specific polycarbonate resin used therein which has high solubility in these non-halogenated solvents. Further, since the polycarbonate resin solution shows excellent stability in the solution state, use of the solution in film formation by casting brings about improved film production efficiency. Moreover, the films obtained from the solution of the present invention have advantages of high surface strength and high abrasion resistance.

The present invention will be explained below in more detail by reference to the following examples, but the invention is not construed as being limited thereto.

### REFERENCE EXAMPLE 1

In 42 liters of water was dissolved 3.7 kg of sodium hydroxide. While the temperature of this solution was kept at 20°C, 9.24 kg of bisphenol AP (BPAP), 0.53 kg of a compound of formula (4) in which the average repeating unit in the silicone chain was Si(CH₃)₂O and n was 50, and R⁷ was -CH₂CH₂CH₂- bonded at the ortho position, and 8 g of hydrosulfite (HD) were dissolved therein.

To the resulting solution was added 28 liters of methylene chloride (MC), followed by addition of 96 g of p-t-butylphenol (PTBP) with stirring. Subsequently, 3.5 kg of phosgene (PG) was blown into the mixture over a period of 60 minutes. After completion of the phosgene blowing, the reaction mixture was vigorously stirred to emulsify it, and 8 g of triethylamine (TEA) was then added thereto. The resulting mixture was stirred for about 1 hour to proceed polymerization.

After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form. Properties of this polycarbonate resin were evaluated, and the results obtained are shown in Table 1.

### COMPARATIVE EXAMPLE 1

A polycarbonate resin was obtained and evaluated in the same manner as in Example 1 except that 7.3 kg of BPA was used in place of 9.24 kg of BPAP and 0.53 kg of the compound of formula (4). The results obtained are shown in Table 1.

### EXAMPLE 2 AND COMPARATIVE EXAMPLES 2 TO 4

Polycarbonate resins, the compositions of which are shown in Table 1, were obtained in the same manner as in Example 1 except that the kinds and amounts of the dihydric phenols of formulae (3) and (4) were changed. The dihydric phenols of formula (4) used in Example 2 and Comparative Examples 3 and 4 were as follows.

### Example 2:

Repeating unit; Si(CH₃)₂O, n=50
R⁷; -CH₂CH₂- bonded at ortho position

### Comparative Example 3:

Repeating unit; Si(CH₃)₂O, n=50
R⁷; -CH₂CH₂CH₂- bonded at ortho position

### Comparative Example 4:

Repeating unit; Si(CH₃)O, n=50
R⁷; -CH₂CH₂CH₂- bonded at ortho position

Properties of the thus-obtained polycarbonate resins were evaluated, and the results obtained are shown in Table 1.

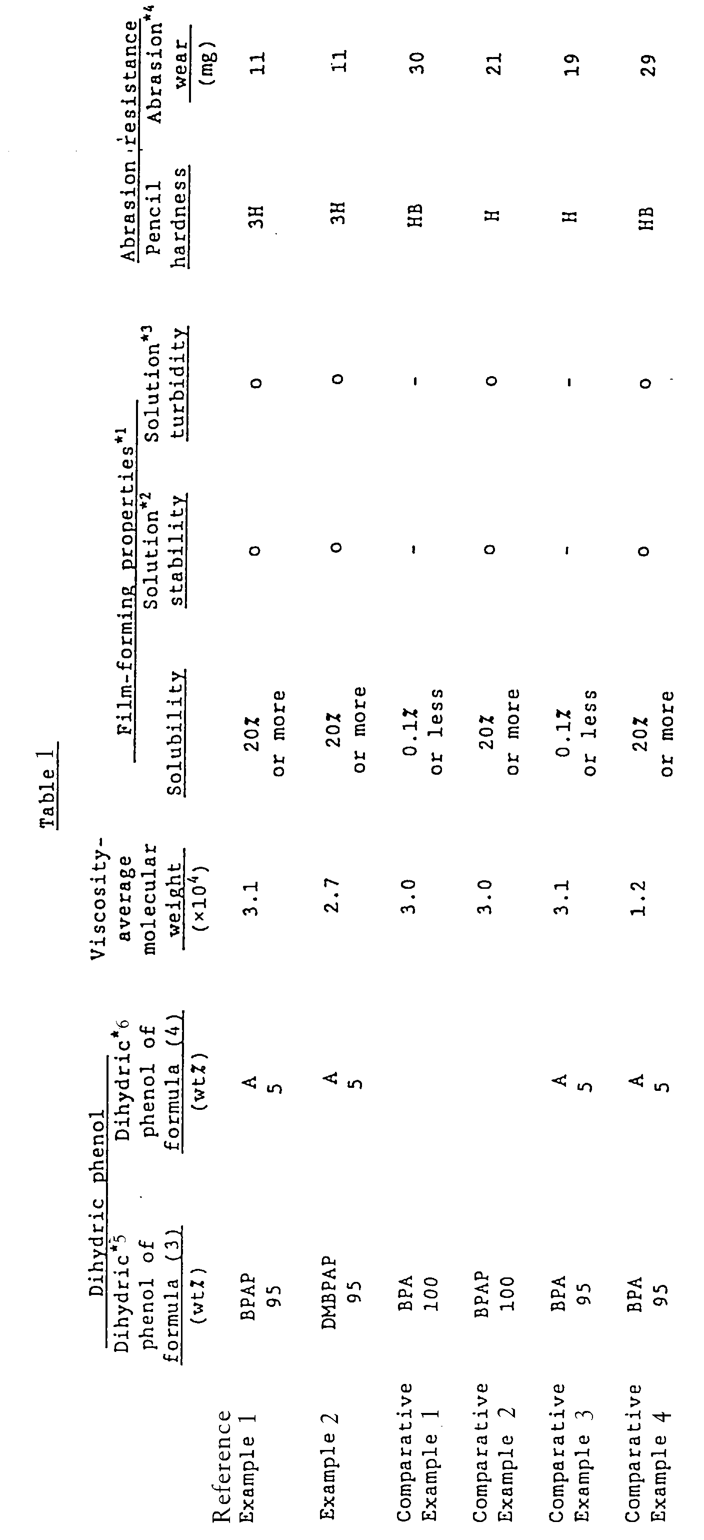

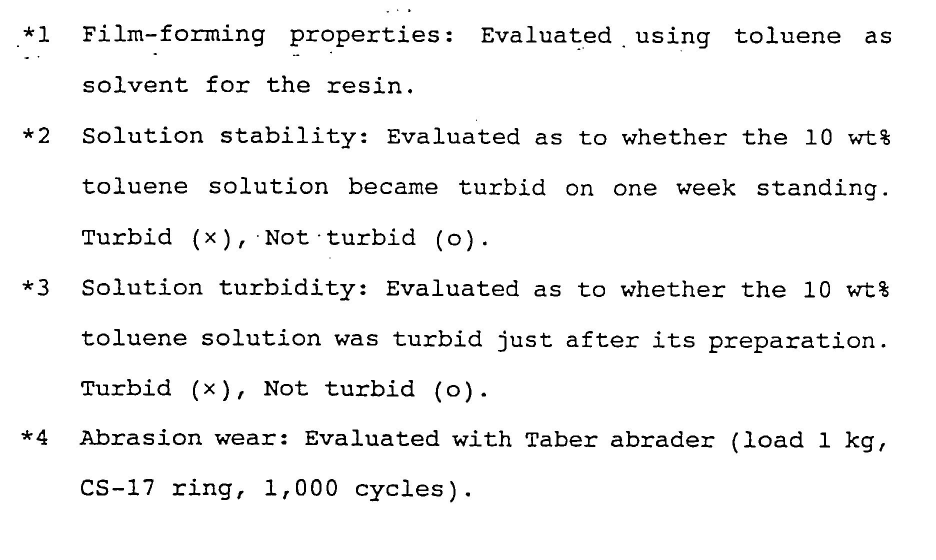

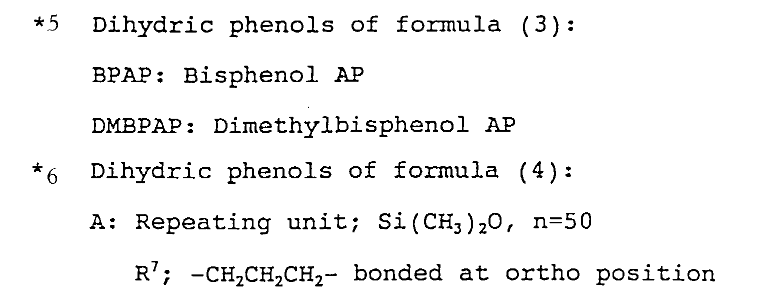

### REFERENCE EXAMPLE 3

In 42 liters of water was dissolved 3.7 kg of sodium hydroxide. While the temperature of this solution was kept at 20°C, 8.57 kg of bisphenol Z (BPZ), 94.5 g of a compound of formula (4) in which the average repeating unit in the silicone chain was Si(CH₃)₂O and n was 40, and R⁷ was -CH₂CH₂CH₂- bonded at the ortho position, and 8 g of hydrosulfite (HD) were dissolved therein.

To the resulting solution was added 28 liters of methylene chloride (MC), followed by addition of 148 g of p-t-butylphenol (PTBP) with stirring. Subsequently, 3.5 kg of phosgene (PG) was blown into the mixture over a period of 60 minutes. After completion of the phosgene blowing, the reaction mixture was vigorously stirred to emulsify it, and 8 g of triethylamine (TEA) was then added thereto. The resulting mixture was stirred for about 1 hour to proceed polymerization.

After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form. properties of this polycarbonate resin were evaluated, and the results obtained are shown in Table 2.

### COMPARATIVE EXAMPLE 5

A polycarbonate resin was obtained and evaluated in the same manner as in Example 3 except that 7.3 kg of BPA was used in place of 8.57 kg of BPZ and 94.5 g of the compound of formula (4). The results obtained are shown in Table 2.

### EXAMPLE 4 AND COMPARATIVE EXAMPLES 6 TO 8

Polycarbonate resins, the compositions of which are shown in Table 2, were obtained in the same manner as in Reference ExampIe 3 except that the kinds and amounts of the dihydric phenols of formulae (3) and (4) were changed. The dihydric phenols of formula (4) used in Example 4 and Comparative Examples 7 and 8 were as follows.

### Example 4:

Repeating unit; Si(CH₃)₂O, n=40
R⁷; -CH₂CH₂CH₂- bonded at ortho position

### Comparative Example 7:

Repeating unit; Si(CH₃)₂O, n=40
R⁷; -CH₂CH₂CH₂- bonded at ortho position

### Comparative Example 8:

Repeating unit; Si(CH₃)₂O, n=40
R⁷; -CH₂CH₂CH₂- bonded at ortho position.

Properties of the thus-obtained polycarbonate resins were evaluated, and the results obtained are shown in Table 2.

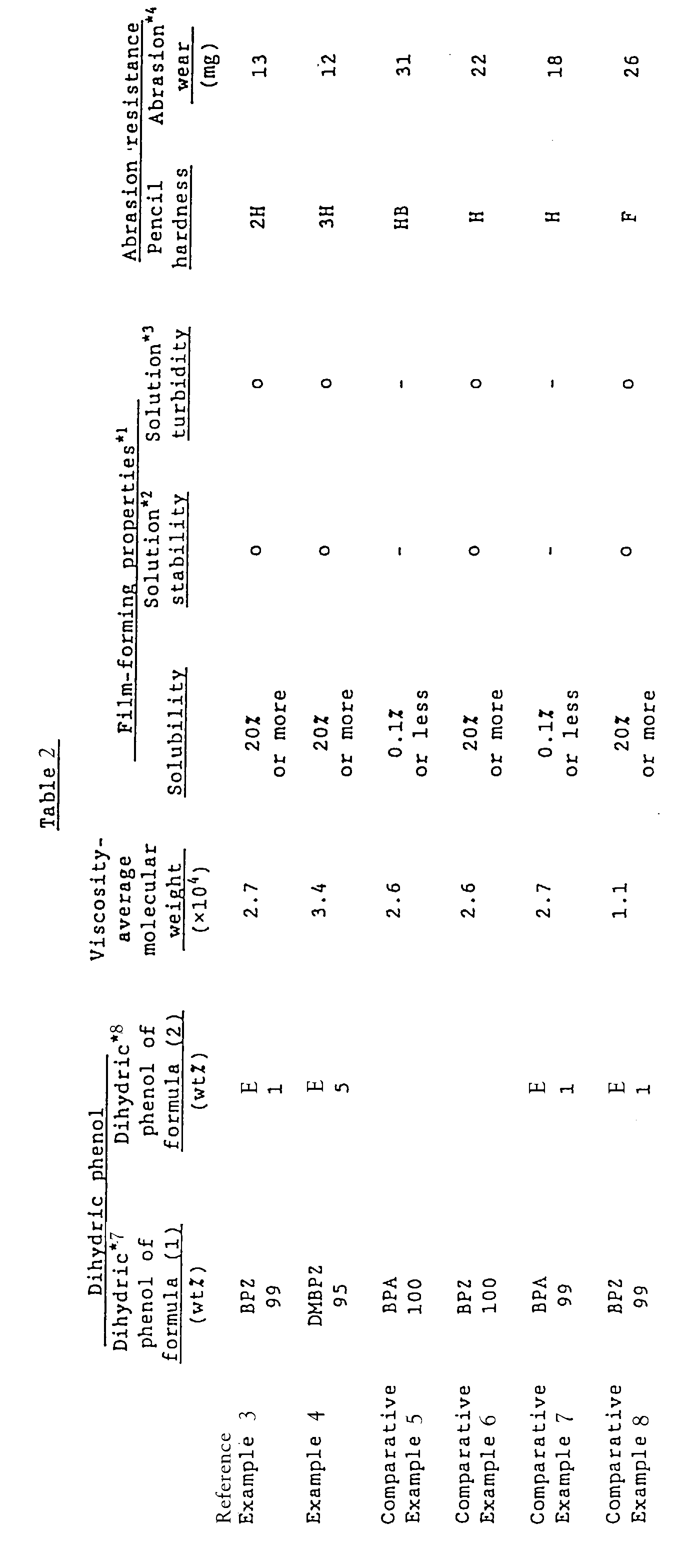

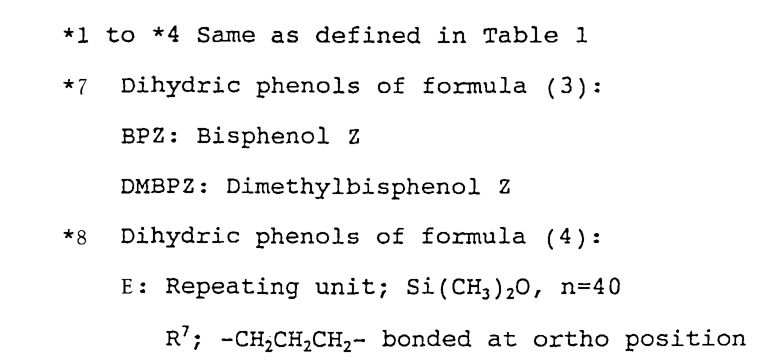

## Claims

1. A polycarbonate resin solution for use in film formation by casting, the solution comprising:
(a) a non-halogenated aromatic hydrocarbon solvent comprising toluene, xylene or ethylbenzene; and dissolved therein
(b) 1-30% by weight, based on the solution, of a copolycarbonate resin consisting essentially of structural units represented by the following formula (1) and structural units represented by the following formula (2), the structural units of formula (2) being present in an amount of from 0.1 to 50% by weight based on the total amount of all the structural units, and having a viscosity-average molecular weight of from 15,000 to 100,000: 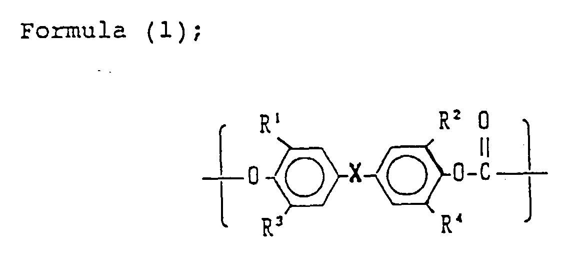 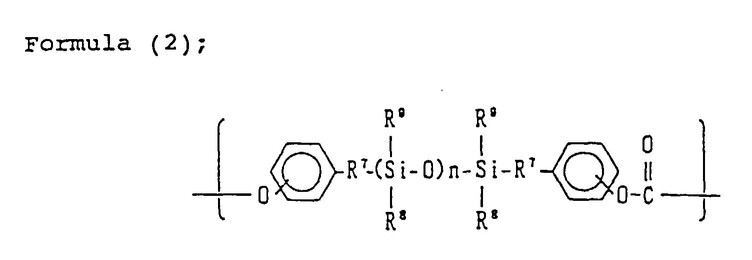 wherein in formula (1), R¹ and R² each represents a hydrogen atom, a halogen atom, or an alkyl group having from 1 to 4 carbon atoms, R³ and R⁴ each represents an alkyl group having from 1 to 4 carbon atoms, and -X- represents an arylene group, a group of the formula 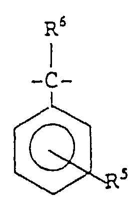 wherein R⁵ represents hydrogen atom, a halogen atom, or an alkyl group having from 1 to 4 carbon atoms and R⁶ represents an alkyl group having from 1 to 3 carbon atoms or an aryl group, or a substituted or unsubstituted carbocyclic or heterocyclic ring of the formula 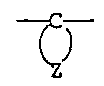 wherein Z represents a group of atoms necessary for forming the ring; and in formula (2), R⁷ represents an alkylene or alkylidene group having from 2 to 6 carbon atoms, R⁸ and R⁹ each represents an alkyl group having from 1 to 3 carbon atoms or an aryl group, and n is an integer of from 1 to 200.

2. A solution as claimed in claim 1, wherein said structural unit represented by formula (1) is derived from 1,1-bis(4-hydroxy-3-methylphenyl)-1-phenylethane.

3. A solution as claimed in claim 1, wherein said structural unit represented by formula (1) is derived from 1,1-bis(4-hydroxy-3-methylphenyl)cyclohexane.

4. A solution as claimed in claim 1, wherein the viscosity-average molecular weight of said copolycarbonate resin is from 20,000 to 50,000.

5. A process for producing a polycarbonate resin solution suitable for use in film formation by casting, which comprises: copolymerizing a dihydric phenol represented by the following formula (3) and a dihydric phenol represented by the following formula (4) by means of interfacial polymerization, with the dihydric phenol of formula (4) being used in an amount of from 0.1 to 50% by weight based on the total amount of all the dihydric phenols, thereby to produce a copolycarbonate resin having a viscosity-average molecular weight of from 15,000 to 100,000: 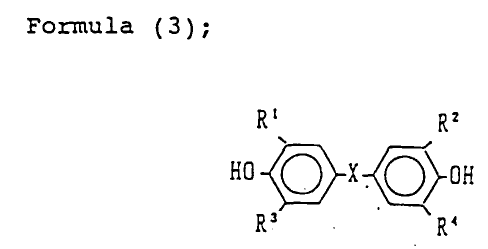 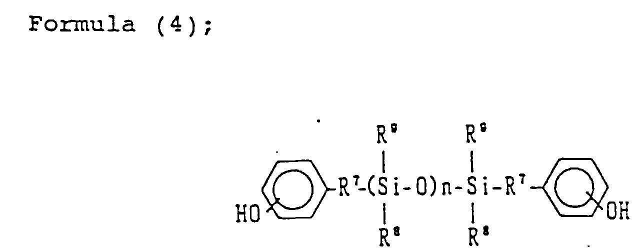 wherein in formula (3), R¹ and R² each represents a hydrogen atom, a halogen atom, or an alkyl group having from 1 to 4 carbon atoms, R³ and R⁴ each represents an alkyl group having from 1 to 4 carbon atoms, and -X- represents an arylene group, a group of the formula 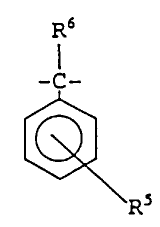 wherein R⁵ represents hydrogen atom, a halogen atom, or an alkyl group having from 1 to 4 carbon atoms and R⁶ represents an alkyl group having from 1 to 3 carbon atoms or an aryl group, or a substituted or unsubstituted carbocyclic or heterocyclic ring of the formula 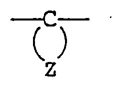 wherein Z represents a group of atoms necessary for forming the ring; and in formula (4), R⁷ represents an alkylene or alkylidene group having from 2 to 6 carbon atoms, R⁸ and R⁹ each represents an alkyl group having from 1 to 3 carbon atoms or an aryl group, and n is an integer of from 1 to 200 ; and
dissolving the copolycarbonate resin thus formed in a non-halogenated aromatic hydrocarbon solvent comprising toluene, xylene or ethylbenzene to form a solution having a copolycarbonate concentration of 1-30% by weight.

6. Use of a polycarbonate resin solution according to Claim 1 in film formation by casting.

7. A method of forming a film by casting a polycarbonate resin solution according to any of Claims 1-4 on to the surface of a drum or belt to form a wet film on said surface and removing the non-halogenated hydrocarbon solvent from the wet film by hot-air drying.

## Patentansprüche

1. Polycarbonatharz-Lösung zur Verwendung bei der Filmbildung durch Gießen, wobei die Lösung umfaßt:
(a) ein nicht-halogeniertes aromatisches Kohlenwasserstoff-Lösungsmittel, das Toluol, Xylol oder Ethylbenzol umfaßt, und darin gelöst:
(b) 1 bis 30 Gew.-%, bezogen auf die Lösung, eines Copolycarbonatharzes, das im wesentlichen aus Struktureinheiten, die durch die folgende Formel (1) dargestellt werden, und Struktureinheiten, die durch die folgende Formel (2) dargestellt werden, wobei die Struktureinheiten der Formel (2) in einer Menge von 0,1 bis 50 Gew.-%, bezogen auf die Gesamtmenge aller Struktureinheiten, vorliegen, besteht und das ein Viskositätsmittel des Molekulargewichts von 15 000 bis 100 000 hat: 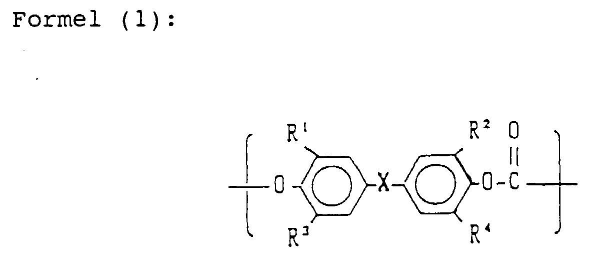 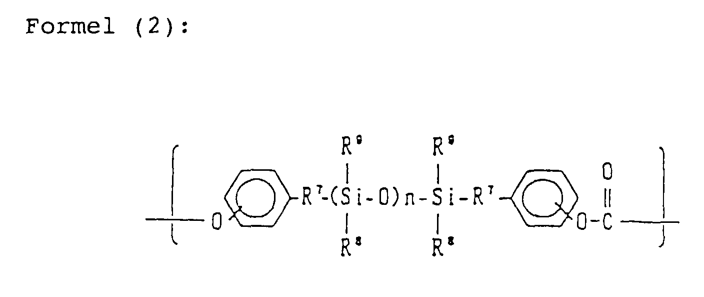 wobei in Formel (1) R¹ und R² jeweils ein Wasserstoffatom, ein Halogenatom oder eine Alkyl-Gruppe mit 1 bis 4 Kohlenstoffatomen darstellen; R³ und R⁴ jeweils eine Alkyl-Gruppe mit 1 bis 4 Kohlenstoffatomen darstellen und -X- eine Arylen-Gruppe, eine Gruppe der Formel: 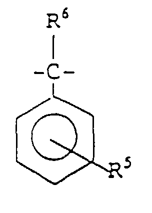 worin R⁵ für ein Wasserstoffatom, ein Halogenatom oder eine Alkyl-Gruppe mit 1 bis 4 Kohlenstoffatomen steht und R⁶ für eine Alkyl-Gruppe mit 1 bis 3 Kohlenstoffatomen oder eine Aryl-Gruppe steht, oder einen substituierten oder unsubstituierten carbocyclischen oder heterocyclischen Ring der Formel 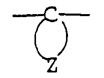 worin Z für eine Gruppe von Atomen, die zur Bildung des Rings notwendig sind, steht, darstellt, und in Formel (2) R⁷ eine Alkylen- oder Alkyliden-Gruppe mit 2 bis 6 Kohlenstoffatomen darstellt; R⁸ und R⁹ jeweils eine Alkyl-Gruppe mit 1 bis 3 Kohlenstoffatomen oder eine Aryl-Gruppe darstellen und n eine ganze Zahl von 1 bis 200 ist.

2. Eine Lösung nach Anspruch 1,
dadurch **gekennzeichnet,** daß
die Struktureinheit, die durch die Formel (1) dargestellt wird, von 1,1-Bis(4-hydroxy-3-methylphenyl)-1-phenylethan abgeleitet ist.

3. Lösung nach Anspruch 1,
dadurch **gekennzeichnet,** daß
die Struktureinheit, die durch die Formel (1) dargestellt wird, von 1,1-Bis(4-hydroxy-3-methylphenyl)cyclohexan abgeleitet ist.

4. Lösung nach Anspruch 1,
dadurch **gekennzeichnet,** daß
das Viskositätsmittel des Molekulargewichts für das Copolycarbonatharz zwischen 20 000 und 50 000 liegt.

5. Verfahren zur Herstellung einer Polycarbonatharz-Lösung, die zur Verwendung bei der Filmbildung durch Gießen geeignet ist, das umfaßt:
Copolymerisieren eines zweiwertigen Phenols, das durch die folgende Formel (3) dargestellt wird, und eines zweiwertigen Phenols, das durch die folgende Formel (4) dargestellt wird, mittels Grenzflächen-Polymerisation, wobei das zweiwertige Phenol der Formel (4) in einer Menge von 0,1 bis 50 Gew.-%, bezogen auf die Gesamtmenge aller zweiwertigen Phenole, eingesetzt wird, um dadurch ein Polycarbonatharz mit einem Viskositätsmittel des Molekulargewichts von 15 000 bis 100 000 herzustellen: 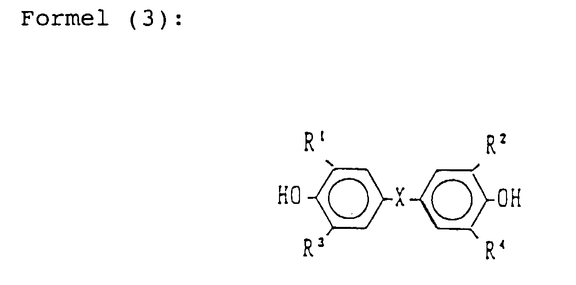 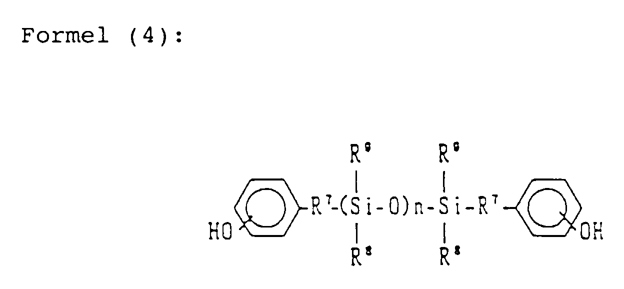 wobei in Formel (3) R¹ und R² jeweils ein Wasserstoffatom, ein Halogenatom oder eine Alkyl-Gruppe mit 1 bis 4 Kohlenstoffatomen darstellen; R³ und R⁴ jeweils eine Alkyl-Gruppe mit 1 bis 4 Kohlenstoffatomen darstellen und -X- eine Arylen-Gruppe, eine Gruppe der Formel: 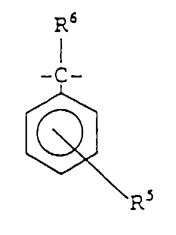 worin R⁵ ein Wasserstoffatom, ein Halogenatom, oder eine Alkyl-Gruppe mit 1 bis 4 Kohlenstoffatomen darstellt und R⁶ eine Alkyl-Gruppe mit 1 bis 3 Kohlenstoffatomen oder eine Aryl-Gruppe darstellt; oder einen substituierten oder unsubstituierten carbocyclischen oder heterocyclischen Ring der Formel 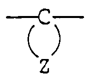 worin Z für eine Gruppe von Atomen, die zur Bildung des Rings notwendig sind, steht, darstellt, und in Formel (4) R⁷ eine Alkylen- oder Alkyliden-Gruppe mit 2 bis 6 Kohlenstoffatomen darstellt; R⁸ und R⁹ jeweils eine Alkyl-Gruppe mit 1 bis 3 Kohlenstoffatomen oder eine Aryl-Gruppe darstellen und n eine ganze Zahl von 1 bis 200 ist; und
Lösen des so gebildeten Copolycarbonatharzes in einem nicht-halogenierten aromatischen Kohlenwasserstoff-Lösungsmittel, das Toluol, Xylol oder Ethylbenzol umfaßt, unter Bildung einer Lösung, die eine Copolycarbonat-Konzentration von 1 bis 30 Gew.-% hat.

6. Verwendung einer Polycarbonatharz-Lösung nach Anspruch 1 bei der Filmbildung durch Gießen.

7. Verfahren zur Bildung eines Films durch Gießen einer Polycarbonatharz-Lösung nach einem der Ansprüche 1 bis 4 auf die Oberfläche einer Trommel oder eines Bandes unter Bildung eines nassen Films auf dieser Oberfläche und Entfernen des nicht-halogenierten Kohlenwasserstoff-Lösungsmittels aus dem nassen Film durch Heißlufttrocknung.

## Revendications

1. Solution de résine polycarbonate utile dans la formation de films coulés, la solution comprenant :
(a) un solvant hydrocarboné aromatique non halogéné comprenant du toluène, du xylène ou de l'éthylbenzène ; et dissous dans celui-ci
(b) 1 à 30 % en masse, par rapport à la solution, d'une résine copolycarbonate constituée essentiellement d'unités structurales représentées par la formule suivante (1) et d'unités structurales représentées par la formule suivante (2), les unités structurales de formule (2) étant présentes en une quantité de 0,1 à 50 % en masse par rapport à la quantité totale de toutes les unités structurales, et ayant une masse moléculaire moyenne en viscosité de 15 000 à 100 000 : 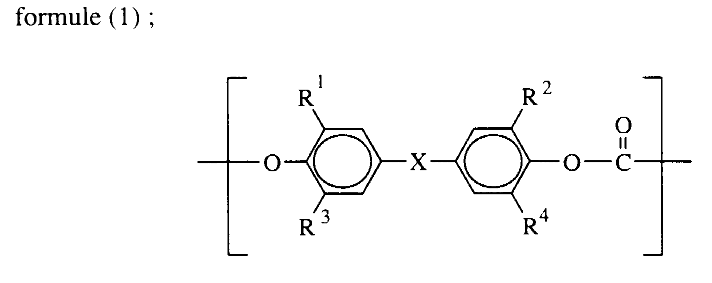 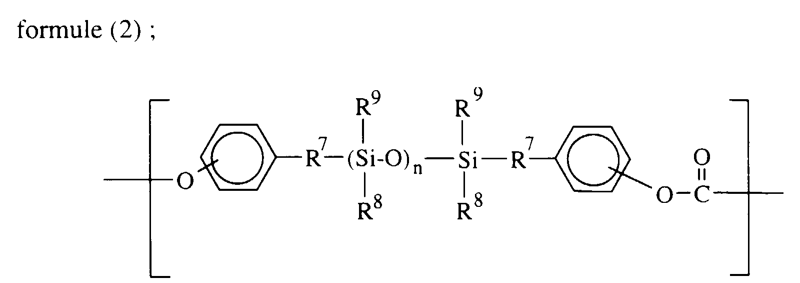
où, dans la formule (1), R¹ et R² représentent chacun un atome d'hydrogène, un atome d'halogène ou un groupe alkyle ayant 1 à 4 atomes de carbone, R³ et R⁴ représentent chacun un groupe alkyle ayant 1 à 4 atomes de carbone, et -X- représente un groupe arylène, un groupe de formule 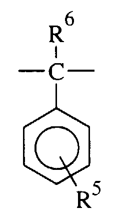 où R⁵ représente un atome d'hydrogène, un atome d'halogène ou un groupe alkyle ayant 1 à 4 atomes de carbone et R⁶ représente un groupe alkyle ayant 1 à 3 atomes de carbone ou un groupe aryle, ou un cycle carbocyclique ou hétérocyclique substitué ou non substitué de formule 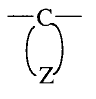 où Z représente un groupe d'atomes nécessaire pour former le cycle ; et dans la formule (2), R⁷ représente un groupe alkylène ou alkylidène ayant 2 à 6 atomes de carbone, R⁸ et R⁹ représentent chacun un groupe alkyle ayant 1 à 3 atomes de carbone ou un groupe aryle et n est un entier de 1 à 200.

2. Solution selon la revendication 1, dans laquelle ladite unité structurale représentée par la formule (1) est dérivée du 1,1-bis(4-hydroxy-3-méthylphényl)-1-phényléthane.

3. Solution selon la revendication 1, dans laquelle ladite unité structurale représentée par la formule (1) est dérivée du 1,1-bis(4-hydroxy-3-méthylphényl)cyclohexane.

4. Solution selon la revendication 1, dans laquelle la masse moléculaire moyenne en viscosité de ladite résine polycarbonate se situe entre 20 000 et 50 000.

5. Procédé pour la production d'une solution de résine polycarbonate appropriée à une utilisation dans la fabrication d'un film coulé comprenant : la copolymérisation d'un phénol dihydroxylé représenté par la formule suivante (3) et d'un phénol dihydroxylé représenté par la formule suivante (4) à l'aide d'une polymérisation interfaciale, le phénol dihydroxylé de formule (4) étant utilisé en une quantité de 0,1 à 50 % en masse par rapport à la quantité totale de tous les phénols dihydroxylés, avec ainsi production d'un résine copolycarbonate ayant une masse moléculaire moyenne en viscosité de 15000 à 100000 : 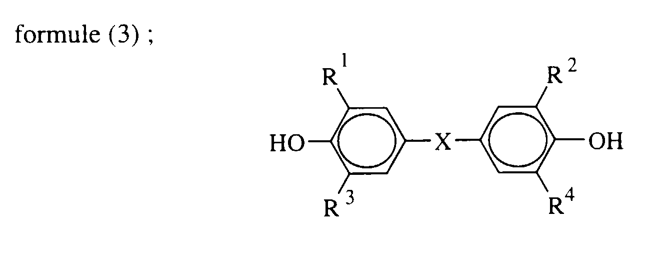 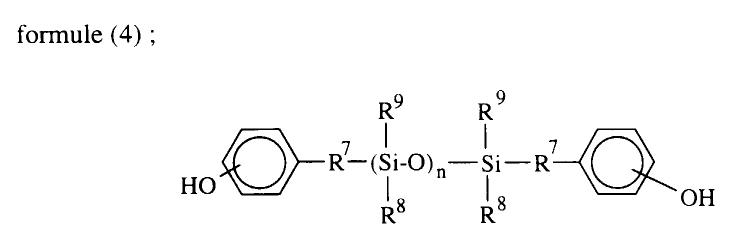 où, dans la formule (3), R¹ et R² représentent chacun un atome d'hydrogène, un atome d'halogène ou un groupe alkyle ayant 1 à 4 atomes de carbone, R³ et R⁴ représentent chacun un groupe alkyle ayant 1 à 4 atomes de carbone, et -X- représente un groupe arylène, un groupe de formule 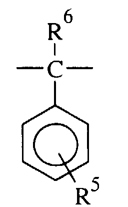 où R⁵ représente un atome d'hydrogène, un atome d'halogène ou un groupe alkyle ayant 1 à 4 atomes de carbone et R⁶ représente un groupe alkyle ayant 1 à 3 atomes de carbone ou un groupe aryle, ou un cycle carbocyclique ou hétérocyclique substitué ou non substitué de formule 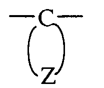 où Z représente un groupe d'atomes nécessaire pour former le cycle ; et dans la formule (4), R⁷ représente un groupe alkylène ou alkylidène ayant 2 à 6 atomes de carbone, R⁸ et R⁹ représentent chacun un groupe alkyle ayant 1 à 3 atomes de carbone ou un groupe aryle et n est un entier de 1 à 200 ; et la dissolution de la résine copolycarbonate ainsi formée dans un solvant hydrocarboné aromatique non halogéné comprenant du toluène, du xylène ou de l'éthylbenzyne pour former une solution ayant une concentration en copolycarbonate de 1 à 30 % en masse.

6. Utilisation d'une solution de résine polycarbonate selon la revendication 1 dans la formation d'un film coulé.

7. Méthode de formation d'un film par coulage d'une solution de résine polycarbonate selon une quelconque des revendications 1 à 4 sur la surface d'un tambour ou d'une courroie pour former un film humide sur ladite surface et par élimination du solvant hydrocarboné non halogéné du film humide par séchage à l'air chaud.
